# FASCICULE DE BREVET EUROPEEN

(11) **EP 1 904 884 B1**
(45) Date de publication et mention de la délivrance du brevet: **10.10.2018**
(21) Numéro de dépôt: 06794181.5
(22) Date de dépôt: 13.07.2006
(51) Int. Cl.: G02C 7/08, G02C 7/10, G02F 1/1333, G02C 7/12

(54) **COMPOSANT OPTIQUE TRANSPARENT PIXELLISE COMPRENANT UN REVETEMENT ABSORBANT, SON PROCEDE DE REALISATION ET SON UTILISATION DANS UN ELEMENT OPTIQUE**
GEPIXELTE UND TRANSPARENTE OPTISCHE KOMPONENTE MIT ABSORBIERENDER BESCHICHTUNG, HERSTELLUNGSVERFAHREN DAFÜR UND VERWENDUNG DAVON IN EINEM OPTISCHEN ELEMENT
PIXELLIZED TRANSPARENT OPTICAL COMPONENT, COMPRISING AN ABSORBENT COATING, METHOD FOR MAKING SAME AND USE IN AN OPTICAL ELEMENT

(30) Priorité: 20.07.2005 FR 0507720
(43) Date de publication de la demande: 02.04.2008
(73) Titulaire: Essilor International, 94220 Charenton-le-Pont (FR)
(72) Inventeur: BALLET, Jerôme, F-94220 Charenton Le Pont (FR); CANO, Jean-Paul, F-94220 Charenton Le Pont (FR)
(74) Mandataire: Cabinet Plasseraud
(86) Numéro de dépôt international: PCT/FR2006/001728
(87) Numéro de publication internationale: WO 2007/010125

(56) Documents cités:
- DE-A1- 19 714 434
- US-A1- 2002 008 898
- US-A1- 2002 140 899
- US-A1- 2004 165 252

## Description

La présente invention concerne la réalisation d'éléments transparents incorporant des fonctions optiques. Elle s'applique notamment à la réalisation de verres ophtalmiques ayant diverses propriétés optiques.

Les verres correcteurs d'amétropie sont traditionnellement fabriqués en mettant en forme un matériau transparent d'indice de réfraction plus élevé que l'air. La forme des verres est choisie de façon que la réfraction aux interfaces entre le matériau et l'air provoque une focalisation appropriée sur la rétine du porteur. Le verre est généralement découpé pour être adapté à une monture, avec un positionnement approprié par rapport à la pupille de l'oeil corrigé. Des verres de lunettes comprenant au moins un ensemble transparent de cellules juxtaposées parallèlement à la surface du verre sont décrites par exemple dans les documents DE 197 14434 A1 et US 2002/140899. Parmi les différents types de verres, ou d'autres non nécessairement limités à l'optique ophtalmique, il serait souhaitable de pouvoir proposer une structure qui permette de mettre en place une ou plusieurs fonction(s) optique(s) de façon souple et modulaire, tout en conservant la possibilité de découper l'élément optique obtenu en vue de l'intégrer à une monture imposée ou choisie par ailleurs, ou à tout autre moyen de maintien dudit élément optique.

Un but de la présente invention est de répondre à ce besoin. Un autre but est que l'élément optique soit industrialisable dans de bonnes conditions.

L'invention propose ainsi un procédé de réalisation d'un élément optique transparent tel que définit dans les revendications 1 et 24, comprenant la production d'un composant optique transparent ayant au moins :
- un ensemble de cellules juxtaposées parallèlement à une surface du composant, chaque cellule étant hermétiquement fermée et contenant une substance à propriété optique, les cellules étant séparées par des parois ;
- et au moins un revêtement absorbant, placé sur les parois sur un côté s'étendant parallèlement à ladite surface du composant.

L'invention propose également un procédé de réalisation d'un élément optique transparent tel que défini précédemment comprenant en plus une étape de découpe du composant optique le long d'un contour défini sur ladite surface, correspondant à une forme déterminée pour l'élément optique.

Les cellules peuvent être remplies avec des substances diverses choisies pour leurs propriétés optiques, par exemple liées à leur indice de réfraction, à leur capacité d'absorption lumineuse ou de polarisation, à leur réponse à des stimuli électriques ou lumineux, etc.

La structure se prête donc à de nombreuses applications, particulièrement celles faisant appel à des fonctions optiques évoluées. Elle implique une discrétisation par pixels de la surface de l'élément optique, ce qui offre une grande souplesse dans la conception mais aussi dans la mise en oeuvre de l'élément. Chaque pixel comprend une cellule délimitée par des parois. La structure comprend ainsi un réseau de cellules délimitées par des parois et au moins un revêtement absorbant, ledit revêtement étant pixellisée identiquement au réseau de cellules. Ce revêtement absorbant déposer parallèlement à la surface du composant optique, et épousant la géométrie du réseau de cellules, a pour rôle essentiel d'empêcher la lumière de se propager au travers de chacune des parois constitutives dudit réseau. Ce revêtement absorbant peut également, dans un autre mode de réalisation, présenter une largeur différente de la largeur stricte des parois composant le réseau de cellules. On comprend aisément que ledit revêtement absorbant représente un revêtement discontinu et que le(s) matériau(x) absorbant(s) n'est (ne sont) présent(s) qu'au niveau de la surface occupée par les parois constitutives du réseau de cellules avec une largeur identique ou différentes de celles desdites parois.

Il est possible de réaliser des structures pixélisées par discrétisation qui consistent en une succession de cellules adjacentes dans le plan, séparées par des parois. Ces parois sont à l'origine d'un défaut de transparence du composant optique et de ce fait elles peuvent entraîner un défaut de transparence de l'élément optique comprenant un tel composant.

Au sens de l'invention on entend qu'un composant optique est transparent lorsque l'observation d'une image au travers dudit composant optique est perçue sans perte significative de contraste, c'est-à-dire lorsque la formation d'une image au travers dudit composant optique est obtenue sans nuisance de la qualité de l'image. Cette définition du terme transparent est applicable, au sens de l'invention, à l'ensemble des objets qualifiés en tant que tel dans la description.

Les parois séparant les cellules du composant optique interagissent avec la lumière en la diffractant. La diffraction est définie comme le phénomène d'éparpillement de la lumière que l'on observe lorsqu'une onde lumineuse est matériellement limitée (J-P. PEREZ - Optique, Fondements et applications 7ème édition - DUNOD - octobre 2004, p. 262). Ainsi un composant optique comprenant de telles parois transmet une image dégradée du fait de la diffraction induite par lesdites parois. La diffraction microscopique se traduit macroscopiquement par de la diffusion. Cette diffusion macroscopique ou diffusion incohérente se traduit par un halo diffusant de la structure pixellisée du composant optique et donc par une perte de contraste de l'image observée au travers de ladite structure. Cette perte de contraste est assimilable à une perte de transparence, telle que définie précédemment. Cet effet de diffusion macroscopique n'est pas acceptable pour la réalisation d'un élément optique comprenant un composant optique pixellisée tel que compris au sens de l'invention. Ceci est d'autant plus vrai dans le cas où ledit élément optique est une lentille ophtalmique, laquelle doit d'une part être transparente et d'autre part ne comporter aucun défaut cosmétique pouvant gêner la vision du porteur d'un tel élément optique.

Un moyen d'atténuer cette diffusion macroscopique consiste à réduire la diffraction induite par les parois en empêchant la lumière de se propager dans lesdites parois séparant les cellules. En effet la partie de la lumière qui est absorbée ou réfléchie n'est pas diffractée. Ainsi une paroi pour laquelle l'interaction avec la lumière est limitée diffractera moins qu'une paroi laissant la lumière se propager. Si on considère à présent, un ensemble de parois, la diminution de la diffraction par chacune des parois entraîne au niveau macroscopique la réduction de l'aspect diffusant de l'ensemble.

Un objet de la présente invention est donc de produire un composant optique transparent comprenant un ensemble de cellules juxtaposées parallèlement à la surface d'un substrat dans lequel les cellules sont séparées les unes des autres par des parois, et au moins un revêtement absorbant absorbant, ledit revêtement étant déposé parallèlement à la surface desdites parois, et selon la géométrie du réseau délimité par les parois. Dans un tel composant optique, ledit revêtement absorbent tout ou partie de la lumière atteignant les parois, évitant ainsi la diffusion macroscopique au travers du réseau de parois, et de ce fait permet la réalisation d'un élément optique transparent comprenant un composant optique tel que décrit.

Au sens de l'invention on entend par revêtement absorbant, un revêtement comprenant un ou plusieurs matériaux qui absorbent dans tout ou partie du spectre visible, c'est-à-dire qui présentent au moins un bande d'absorption de longueur d'onde comprise entre 400 nm et 700 nm. D'une façon avantageuse selon l'invention, on choisira de préférence un revêtement présentant une bande d'absorption sur l'ensemble du spectre visible. Le(s) matériau(x) utilisé(s) pour la réalisation du revêtement pourront éventuellement comprendre une bande d'absorption spectrale dans le proche infrarouge, soit supérieure à 700 nm, et/ou dans le proche ultraviolet, soit inférieure à 400 nm.

Le revêtement absorbant est choisi parmi un revêtement monocouche et multicouche. Dans le cas d'un revêtement monocouche, celui-ci peut être constitué d'un matériau absorbant unique ou peut être constitué d'une association d'au moins deux matériaux, chacun présentant une bande d'absorption identique ou différente dans le spectre visible. On peut par exemple envisager d'utiliser deux matériaux présentant des bandes d'absorption complémentaire afin d'obtenir un revêtement absorbant sur l'ensemble du spectre visible tel que défini précédemment. Dans le cas d'un revêtement multicouche, chaque couche peut être constituée par un matériau identique ou différent tant dans leur nature chimique que dans leur bande d'absorption spécifique. Chaque couche peut également être constitué par un mélange de plusieurs matériaux absorbants.

Dans un premier mode de réalisation de l'invention, le composant optique comprend au moins un revêtement absorbant déposé parallèlement à la base de la surface des parois. Dans un second mode de réalisation, le composant optique comprend au moins un revêtement absorbant déposés parallèlement au sommet de la surface des parois.

Dans un troisième mode de réalisation de l'invention, le composant optique comprend au moins un revêtement absorbant déposé parallèlement à la base et au sommet de la surface des parois.

Dans ces trois modes de réalisation, comme cela a été précisé précédemment, le revêtement absorbant présente une épaisseur identique ou supérieure à l'épaisseur de la paroi sur et/ou sous laquelle il est déposé.

D'une façon avantageuse selon l'invention, le revêtement absorbant est déposé par un procédé de métallisation. Ce procédé peut être mis en oeuvre préalablement à la formation desdites parois, ou postérieurement à la formation desdites parois. Lorsque la métallisation est réalisée préalablement à la formation des parois, ledit procédé de métallisation peut être mis en oeuvre directement sur un support transparent rigide ou au sein d'un film transparent souple reporté ensuite sur un support transparent rigide. Dans ce procédé de métallisation, le revêtement absorbant est constitué de métal. Les métaux utilisables dans le cadre de l'invention sont notamment l'aluminium, l'argent, le chrome, le titane, le platine, le nickel, le cuivre, le fer, le zinc, l'étain, le palladium et l'or. Préférentiellement, le matériau absorbant est choisi parmi l'argent, l'aluminium, le titane, le chrome et l'or.

D'autres matériaux peuvent être utilisés pour réaliser le revêtement absorbant. On peut citer par exemple, les matériaux hybrides tels que les résines sol-gel ou les matériaux composites tels que les mélanges de céramiques/métaux ou silice/métaux. Des polymères intrinsèquement absorbants ou rendus absorbants par dopage, par diffusion ou par absorption de particules absorbantes peuvent également être utilisés dans le cadre de l'invention. Un polymère comprenant des particules de noir de carbone peut être un exemple pour remplir ce rôle. Un revêtement comprenant une ou plusieurs couche(s) de carbone peut aussi être déposés. Ainsi parmi les particules absorbantes aptes à rendre un polymère absorbant utile pour l'invention, on peut notamment citer les colorants, les encres, les pigments, les colloïdes, les particules métalliques, les alliages, le noir de carbone, les nanotubes de carbone. Ces particules peuvent aisément être incorporées au sein de polymères de type sol-gel, polyuréthane, acrylate, ou époxy selon des procédés bien connus par l'homme du métier. Les polymères ainsi obtenus présentent au moins une bande d'absorption comprise entre 400 nm et 700 nm, et préférentiellement, absorbent sur l'ensemble du spectre visible compris entre 400 nm et 700 nm. Ils peuvent éventuellement présentés une bande d'absorption dans le proche ultraviolet ou dans le proche infrarouge.

L'invention comprend ainsi un procédé de réalisation d'un composant optique ayant au moins un ensemble transparent de cellules juxtaposées parallèlement à une surface du composant, les cellules étant séparées par des parois, comprenant les étapes suivantes:
- déposer un revêtement absorbant uniforme sur l'ensemble de la surface d'un support transparent rigide ou d'un film transparent souple;
- déposer une couche de matériau(x) transparents constitutif(s) des parois et réaliser le réseau de cellules au sein de ladite couche de matériau(x) transparents afin d'obtenir ledit ensemble de cellules juxtaposées parallèlement à ladite surface;
- réaliser une attaque chimique, ou physico-chimique du revêtement absorbant au sein de chaque cellule.

Dans une variante de ce procédé, il est possible de :
- déposer un revêtement absorbant au travers un masque, ledit masque présentant le profil de la distribution des cellules au sein du réseau que l'on souhaite obtenir;
- déposer une couche de matériaux transparents constitutifs des parois par procédé de photolithographie positive en alignant ladite couche de matériaux transparents au motif du revêtement absorbant.

La mise en oeuvre d'un tel procédé permet le dépôt d'un revêtement absorbant directement sur le support transparent rigide ou le film transparent souple; en d'autre terme il permet l'obtention d'un composant optique ayant au moins un ensemble transparent de cellules juxtaposées parallèlement à une surface du composant, dans lequel lesdites cellules sont séparés par des parois comprenant un revêtement absorbant en contact avec le support transparent rigide ou le film souple et une couche de matériau(x) transparents constitutif(s) desdites parois. Dans un tel procédé, les parois sont rendues absorbantes par la présence d'un revêtement absorbant à leur base.

Le réseau de cellules est réalisable en utilisant des procédés de fabrication, issus de la microélectronique, bien connu par l'homme du métier. On peut citer à titre illustratif et non limitatif, les procédés tels que l'impression à chaud, l'embossage à chaud, le micromoulage, la photolitographie (hard, soft, positive, négative), la microdéposition telle que l'impression par micro-contact, la sérigraphie, ou encore l'impression par jet de matière.

Dans ce mode de réalisation, lorsque le revêtement absorbant est constitué par une ou plusieurs couche(s) de métaux, l'attaque de la couche métallique est par exemple réalisée par un procédé de type RIE (Reactive Ion Etching). La RIE est un procédé physico-chimique qui consiste en un bombardement de la couche métallique par un faisceau d'ions vertical. Plusieurs gaz sont utilisables dans ce procédé. On peut citer par exemple CF₄, SF₆, O₂, CHF₃, l'Argon. Cette gravure sèche est anisotrope. L'attaque peut également être réalisée par gravure humide par des solutions acides ou basiques.

Dans un autre mode de réalisation l'invention comprend un procédé de réalisation d'un composant optique ayant au moins un ensemble transparent de cellules juxtaposées parallèlement à une surface du composant, les cellules étant séparées par des parois, comprenant les étapes suivantes:
- déposer une couche uniforme de matériau(x) transparents constitutif(s) des parois sur l'ensemble de la surface d'un support transparent rigide ou d'un film transparent souple;
- déposer un revêtement absorbant uniforme sur ladite couche uniforme de matériau(x) constitutif(s);
- réaliser les cellules par un procédé de gravure, au travers d'un masque, dudit revêtement absorbant, puis de ladite couche de matériau(x) transparents afin d'obtenir ledit ensemble de cellules juxtaposées parallèlement à ladite surface.

Dans un tel procédé, les parois sont rendues absorbantes par la présence d'un revêtement absorbant à leur sommet; en d'autre terme ce procédé permet l'obtention d'un composant optique ayant au moins un ensemble transparent de cellules juxtaposées parallèlement à une surface du composant, dans lequel lesdites cellules sont séparées par des parois comprenant une couche de matériau(x) transparents en contact avec le support transparent rigide ou le film souple, et un revêtement absorbant.

Le revêtement absorbant présente une hauteur comprise entre quelques nanomètres et 5 µm. Avantageusement, l'épaisseur du revêtement est comprise entre 2 nm (nanomètre) et 2 µm (micromètre).

Dans une variante de l'invention, le matériau constitutif des parois peut lui-même être absorbant. Dans ce cas le matériau est choisi parmi les polymères intrinsèquement absorbants ou rendus absorbants par dopage, par diffusion ou par absorption de particules absorbantes.

L'ensemble des parois (et par conséquent l'ensemble des cellules du composant optique) peut être formé directement sur un support transparent rigide, ou au sein d'un film transparent souple reporté ensuite sur un support transparent rigide. Ledit support transparent rigide peut être convexe, concave, ou plan sur le côté recevant l'ensemble des cellules.

La géométrie du réseau de cellules se caractérise par des paramètres dimensionnels qui peuvent généralement se ramener aux dimensions (D) des cellules parallèlement à la surface du composant optique, à leur hauteur correspondant à la hauteur (h) des parois qui les séparent, et à l'épaisseur (e) de ces parois (mesurée parallèlement à la surface du composant). Parallèlement à la surface du composant, les cellules sont de préférence séparées par des parois d'épaisseur (e) comprise entre 0,10 µm et 5 µm et de hauteur (h) inférieure à 100 µm et préférentiellement comprise 1 µm et 50 µm inclus.

Avec un dimensionnement des parois tel que défini précédemment il est possible de réaliser un ensemble de cellules juxtaposées à la surface du composant optique présentant un facteur de remplissage τ supérieur à 90%. Dans le cadre de l'invention, le facteur de remplissage est défini comme la surface occupée par les cellules remplies par la substance, par unité de surface du composant optique. En d'autres termes, l'ensemble des cellules occupent au moins 90 % de la surface du composant, du moins dans une région du composant pourvue de l'ensemble de cellules. D'une façon avantageuse le facteur de remplissage est compris entre 90 % et 99,5 % inclus.

Dans un mode de réalisation du procédé, la substance à propriété optique contenue dans certaines au moins des cellules est sous forme de liquide ou de gel. Ladite substance peut notamment présenter au moins une des propriétés optiques choisies parmi la coloration, le photochromisme, la polarisation et l'indice de réfraction.

L'ensemble de cellules du composant optique peut inclure plusieurs groupes de cellules contenant des substances différentes. De même chaque cellule peut être remplie avec une substance présentant une ou plusieurs propriétés optiques telles que décrites précédemment. Il est également possible d'empiler plusieurs ensembles de cellules sur l'épaisseur du composant. Dans ce mode de réalisation les ensembles de cellules peuvent avoir des propriétés identiques ou différentes au sein de chaque couche, ou les cellules au sein de chaque ensemble de cellules peuvent également présenter des propriétés optiques différentes. Ainsi il est possible d'envisager d'avoir une couche dans laquelle l'ensemble de cellules contient une substance permettant d'obtenir une variation de l'indice de réfraction et une autre couche ou l'ensemble de cellules contient une substance à propriété photochromique.

Un objet de la présente invention est également un procédé de production d'un composant optique transparent tel que défini précédemment, qui comprend la formation sur un substrat d'un réseau de parois pour délimiter les cellules parallèlement à ladite surface du composant, la formation d'au moins un revêtement absorbant parallèlement à la surface desdites parois, un remplissage collectif ou individuel des cellules avec la substance à propriété optique sous forme de liquide ou de gel, et la fermeture des cellules sur leur côté opposé au substrat.

Un autre aspect de l'invention se rapporte à un composant optique, utilisé dans le procédé ci-dessus. Ce composant optique comprend au moins un ensemble transparent de cellules juxtaposées parallèlement à une surface du composant, chaque cellules étant séparées par des parois, et au moins un revêtement comprenant au moins un matériau absorbant déposé parallèlement à la surface desdites parois. Chaque cellule est hermétiquement fermée et contient au moins une substance à propriété optique.

Un autre aspect encore de l'invention se rapporte à un élément optique transparent, notamment un verre de lunette, réalisé en découpant un tel composant optique. Un verre de lunette comprend une lentille ophtalmique. Par lentille ophtalmique, on entend les lentilles s'adaptant à une monture de lunette pour protéger l'oeil et/ou corriger la vue, ces lentilles étant choisies parmi les lentilles afocales, unifocales, bifocales, trifocales et progressives. Si l'optique ophtalmique est un domaine d'application préféré de l'invention, on comprendra que cette invention est applicable à des éléments optiques transparents d'autres natures, comme par exemple des lentilles pour instruments d'optiques, des filtres notamment pour la photographie ou l'astronomie, des lentilles de visée optique, des visières oculaires, des optiques de dispositifs d'éclairage, etc. Au sein de l'invention, on inclut dans l'optique ophtalmique les lentilles ophtalmiques, mais aussi les lentilles de contact et les implants oculaires.

D'autres particularités et avantages de la présente invention apparaîtront dans la description ci-après d'exemples de réalisation non limitatifs, en référence aux dessins annexés, dans lesquels:
- la figure 1 est une vue de face d'un composant optique selon l'invention;
- la figure 2 est une vue de face d'un élément optique obtenu à partir de ce composant optique;
- la figure 3a est une vue schématique en coupe d'un composant optique selon un premier mode de réalisation de l'invention;
- la figure 3b est une vue schématique en coupe d'un composant optique selon un second mode de réalisation de l'invention;
- la figure 3c est une vue schématique en coupe d'un composant optique selon un troisième mode de réalisation de l'invention.

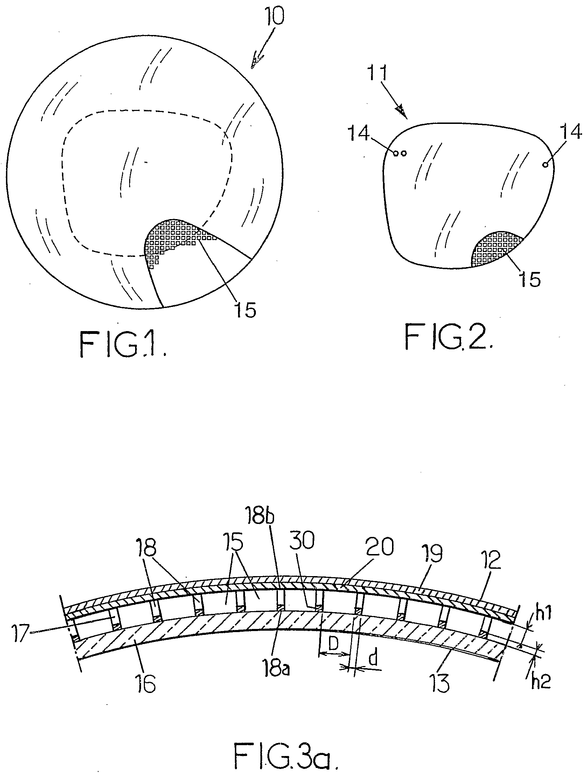

Le composant optique 10 représenté sur la figure 1 est une ébauche pour verre de lunettes. Un verre de lunettes comprend une lentille ophtalmique, telle que définie précédemment. Naturellement si l'optique ophtalmique est un domaine d'application préféré de l'invention, on comprendra que cette invention est applicable à des éléments optiques transparents d'autres natures.

La figure 2 montre un verre de lunette 11 obtenu en découpant l'ébauche 10 suivant un contour prédéfini, représenté en trait interrompu sur la figure 1. Ce contour est a priori arbitraire, dès lors qu'il s'inscrit dans l'étendue de l'ébauche. Des ébauches fabriquées en série sont ainsi utilisables pour obtenir des verres adaptables à une grande variété de montures de lunettes. Le bord du verre découpé peut sans problème être détouré, de façon classique, pour lui conférer une forme adaptée à la monture et au mode de fixation du verre sur cette monture et/ou pour des raisons esthétiques. Il est possible d'y percer des trous 14, par exemples pour recevoir des vis servant à la fixation sur la monture.

La forme générale de l'ébauche 10 peut être conforma aux standards de l'industrie, avec par exemple un contour circulaire de diamètre 70 mm (millimètre), une face avant convexe 12, et une face arrière concave 13 (figure 3a). Les outils traditionnels de découpe, de détourage et de perçage peuvent ainsi être utilisés pour obtenir le verre 11 à partir de l'ébauche 10.

Sur les figures 1 et 2, un arrachement partiel des couches superficielles fait apparaître la structure pixellisée de l'ébauche 10 et du verre 11. Cette structure consiste en un réseau de cellules ou microcuves 15 formées dans une couche 17 du composant transparent et un revêtement absorbant 30 (figure 3a). Sur ces figures, les dimensions de la couche 17, du revêtement 30, et des cellules 15 ont été exagérées par rapport à celles de l'ébauche 10 et de son substrat 16 afin de faciliter la lecture du dessin.

Les dimensions latérales (D) des cellules 15 (parallèlement à la surface de l'ébauche 10) sont supérieures au micron et peuvent aller jusqu'à quelques millimètres. Ce réseau de cellules est ainsi réalisable avec des technologies bien maîtrisées dans le domaine de la microélectronique ou des dispositifs micromécaniques. La hauteur (h₁) de la couche 17 constitutives des parois 18 est préférentiellement comprise entre 1 µm et 50 µm. Les parois 18 ont une épaisseur (d) comprise entre 0,1 µm et 5,0 µm permettant notamment d'obtenir un facteur de remplissage élevé. La couche de matériaux absorbants 30 a une hauteur (h₂) comprise entre quelques nanomètres et 5 µm. Elle peut notamment constitué une couche d'aluminium d'une hauteur de 1 µm.

La figure 3a est un premier mode de réalisation de l'invention dans lequel le revêtement absorbant est déposé parallèlement à la surface du substrat et à la base (18a) des parois. Par base des parois, on entend au sens de l'invention le côté des parois parallèle à la surface du substrat se situant à la plus courte distance dudit substrat. Dans ce mode de réalisation particulier l'épaisseur de la couche de matériaux absorbants 30 présente à la base de chacune des parois constituant le réseau de cellules est identique ou supérieure à l'épaisseur desdites parois 18. Ceci est aisément obtenu par l'utilisation d'un masque lors d'un procédé de gravure du revêtement absorbant.

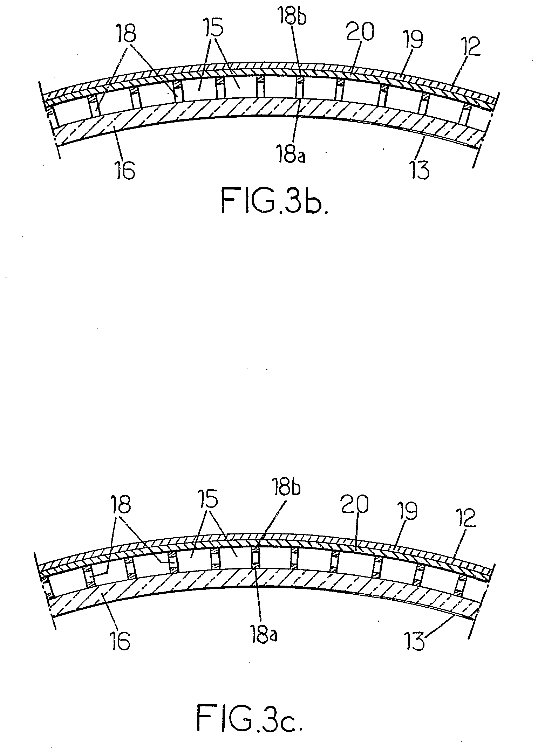

La figure 3b est un second mode de réalisation de l'invention dans lequel le revêtement absorbant est déposé parallèlement à la surface du substrat et au sommet (18b) des parois. Par sommet des parois, on entend au sens de l'invention le côté des parois parallèle à la surface du substrat se situant à la plus longue distance dudit substrat, c'est-à-dire du côté opposé au substrat.

La figure 3c est un troisième mode de réalisation de l'invention dans lequel un revêtement absorbant (18) est déposé parallèlement à la surface du substrat à la base (18a) et au sommet (18b) des parois.

La couche 17 incorporant le réseau de cellules 15 peut être recouverte par un certain nombre de couches additionnelles 19, 20 (figure 3), comme il est usuel en optique ophtalmique. Ces couches ont par exemple des fonctions de résistance aux chocs, de résistance à la rayure, de coloration, d'anti-reflet, d'anti-salissure, etc. Dans l'exemple représenté, la couche 17 incorporant le réseau de cellules est placée immédiatement au-dessus du substrat transparent 16, mais on comprendra qu'une ou plusieurs couches intermédiaires peuvent se trouver entre eux, tels que des couches présentant des fonctions de résistance aux chocs, de résistance à la rayure, de coloration.

Le substrat transparent 16 peut être en verre ou en différents matériaux polymères couramment utilisés en optique ophtalmique. Parmi les matériaux polymères utilisables, on peut citer à titre indicatif et non limitatif, les matériaux polycarbonates; polyamides ; polyimides ; polysulfones ; copolymères de polyéthylènetérephtalate et polycarbonate; polyoléfines, notamment polynorbornènes ; polymères et copolymères de diéthylène glycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy; et polymères et copolymères épisulfide.

La couche 17 incorporant le réseau de cellules est de préférence située sur sa face avant convexe 12, la face arrière concave 13 restant libre pour être éventuellement remise en forme par usinage et polissage si cela est nécessaire. Le composant optique peut également être situé sur la face concave d'une lentille. Bien évidemment, le composant optique peut aussi être intégré sur un élément optique plan.

Les microcuves 15 sont remplies avec la substance à propriété optique, à l'état de liquide ou de gel. Un traitement préalable de la face avant du composant peut éventuellement être appliqué pour faciliter le mouillage en surface du matériau des parois et du fond des microcuves. La solution ou suspension formant la substance à propriété optique peut être la même pour toutes les microcuves du réseau, auquel cas elle peut être introduite simplement par immersion du composant dans un bain approprié, par un procédé de type sérigraphique, par un procédé de revêtement par centrifugation (spin process), par un procédé d'étalement de la substance à l'aide d'un rouleau ou d'une raclette, ou encore par un procédé de spray. Il est également possible de l'injecter localement dans les microcuves individuelles à l'aide d'une tête de projection de matière.

Pour fermer hermétiquement un ensemble de microcuves remplies, on applique par exemple un film plastique collé, soudé thermiquement ou laminé à chaud sur le haut des parois 18, ou sur le revêtement absorbant lorsque celui-ci est présent au sommet des parois. On peut aussi déposer sur la zone à obturer un matériau polymérisable en solution, non miscible avec la substance à propriété optique contenue dans les microcuves, puis faire polymériser ce matériau, par exemple à chaud ou sous irradiation.

Une fois que le réseau de microcuves 15 a été complété, le composant peut recevoir les couches ou revêtements supplémentaires 19, 20 pour terminer sa fabrication. Des composants de ce type sont fabriqués en série puis stockés pour être plus tard repris et découpés individuellement conformément aux besoins d'un client.

Si la substance à propriété optique n'est pas destinée à rester à l'état de liquide ou de gel, on peut lui appliquer un traitement de solidification, par exemple une séquence de chauffage et/ou d'irradiation, à un stade approprié à partir du moment où la substance a été déposée.

Dans une variante le composant optique constitué d'un réseau de microcuves est construit sous la forme d'un film transparent souple. Un tel film est réalisable par des techniques analogues à celles décrites précédemment. Dans ce cas le film est réalisable sur un support plan et non convexe ou concave.

Le film est par exemple fabriqué industriellement sur une étendue relativement grande, puis découpé aux dimensions appropriées pour être reporté sur le substrat 16 d'une ébauche. Ce report peut être effectué par collage du film souple, par thermoformage du film, voire par un phénomène physique d'adhérence sous vide. Le film peut ensuite recevoir divers revêtements, comme dans le cas précédent, ou bien être reporté sur le substrat 16 lui-même revêtu d'une ou plusieurs couches additionnelles telles que décrites précédemment.

Dans un domaine d'application de l'invention, la propriété optique de la substance introduite dans les microcuves 15 se rapporte à son indice de réfraction. On module l'indice de réfraction de la substance le long de la surface du composant pour obtenir une lentille correctrice. Dans une première variante de l'invention, la modulation peut être réalisée en introduisant des substances d'indices différents lors de la fabrication du réseau de microcuves 15.

Dans une autre variante de l'invention, la modulation peut être réalisée en introduisant dans les microcuves 15 une substance dont l'indice de réfraction peut être réglé ultérieurement sous irradiation. L'inscription de la fonction optique correctrice est alors effectuée en exposant l'ébauche 10 ou le verre 11 à de la lumière dont l'énergie varie le long de la surface pour obtenir le profil d'indice souhaité afin de corriger la vision d'un patient. Cette lumière est typiquement celle produite par un laser, l'équipement d'écriture étant semblable à celui utilisé pour graver des CDROM ou autres supports optiques de mémoire. L'exposition plus ou moins grande de la substance photosensible peut résulter d'une modulation de la puissance du laser et/ou du choix du temps d'exposition.

Parmi les substances utilisables dans cette application, on peut citer, par exemple, les matériaux mésoporeux ou les cristaux liquides. Ces cristaux liquides peuvent être figés par une réaction de polymérisation, par exemple induite par irradiation. On peut ainsi les figer dans un état choisi pour introduire un retard optique déterminé dans les ondes lumineuses qui les traversent. Dans le cas d'un matériau mésoporeux le contrôle de l'indice de réfraction du matériau se fait au travers de la variation de sa porosité. Une autre possibilité est d'utiliser des photopolymères dont une propriété bien connue est de changer d'indice de réfraction au cours de la réaction de polymérisation induite par irradiation. Ces changements d'indice sont dus à une modification de la densité du matériau et à un changement de la structure chimique. On utilisera de préférence des photopolymères qui ne subissent qu'une très faible variation de volume lors de la réaction de polymérisation.

La polymérisation sélective de la solution ou suspension est réalisée en présence d'un rayonnement différencié spatialement par rapport à la surface du composant, afin d'obtenir la modulation d'indice souhaitée. Cette modulation est déterminée préalablement en fonction de l'amétropie estimée de l'oeil d'un patient à corriger.

Dans une autre application de l'invention, la substance introduite sous forme de gel ou de liquide dans les microcuves a une propriété de polarisation. Parmi les substances utilisées dans cette application on peut notamment citer les cristaux liquides.

Dans une autre application de l'invention, la substance introduite sous forme de liquide ou de gel dans les microcuves a une propriété photochromique. Parmi les substances utilisés dans cette application on peut citer à titre d'exemples les composés photochromiques contenant un motif central tel qu'un noyau spirooxazine, spiro-indoline[2,3']benzoxazine, chromène, spiroxazine homoazaadamantane, spirofluorène-(2*H*)-benzopyrane, naphto[2,1-*b*]pyrane.

Dans le cadre de l'invention la substance à propriété optique peut être un colorant, ou un pigment apte à apporter une modification du taux de transmission.

## Revendications

1. Procédé de réalisation d'un élément optique transparent choisi parmi des lentilles ophtalmiques, des lentilles de contact, des implants oculaires, des lentilles pour instruments d'optiques, des lentilles de visée optique et des visières oculaires, le procédé comprenant la production d'un composant optique transparent ayant au moins :
- un ensemble de cellules juxtaposées parallèlement à une surface du composant, chaque cellule étant hermétiquement fermée et contenant une substance à propriété optique, les cellules étant séparées par des parois ;
- et au moins un revêtement absorbant, placé sur les parois sur un côté s'étendant parallèlement à ladite surface du composant.

2. Procédé de réalisation d'un élément optique transparent selon la revendication 1, comprenant en plus une étape de découpe du composant optique le long d'un contour défini sur ladite surface, correspondant à une forme déterminée pour l'élément optique.

3. Procédé selon l'une quelconque des revendications précédentes, dans lequel la propriété optique est choisie parmi une propriété de coloration, de photochromisme, de polarisation, et d'indice de réfraction.

4. Procédé selon la revendication 3, dans lequel la substance à propriété optique contenue dans certaines au moins des cellules est sous forme de liquide ou de gel.

5. Procédé selon l'une quelconque des revendications précédentes, dans lequel l'ensemble des cellules du composant optique est formé directement sur un support transparent rigide, ou au sein d'un film transparent souple reporté ensuite sur un support transparent rigide.

6. Procédé selon la revendication 5, dans lequel le support transparent rigide peut être convexe, concave, ou plan sur le côté recevant l'ensemble des cellules.

7. Procédé selon l'une quelconque des revendications précédentes, dans lequel le revêtement absorbant présente au moins une bande d'absorption de longueur d'onde comprise entre 400 nm et 700 nm.

8. Procédé selon la revendication 7, dans lequel le revêtement absorbant présente une bande d'absorption sur l'ensemble du spectre visible.

9. Procédé selon la revendication 8, dans lequel le revêtement absorbant présente en plus une bande d'absorption spectrale dans le proche infrarouge, soit supérieure à 700 nm, et/ou dans le proche ultraviolet, soit inférieure à 400 nm.

10. Procédé selon l'une quelconque des revendications précédentes, dans lequel le revêtement absorbant est réalisé par un procédé de métallisation.

11. Procédé selon l'une quelconque des revendications précédentes, dans lequel le revêtement absorbant est déposé préalablement à la formation desdites parois, ou postérieurement à la formation desdites parois.

12. Procédé selon l'une quelconque des revendications précédentes, comprenant les étapes suivantes:
- déposer un revêtement absorbant uniforme sur l'ensemble de la surface d'un support transparent rigide ou d'un film transparent souple;
- déposer une couche de matériau(x) transparent(s) constitutif(s) des parois et réaliser le réseau de cellules au sein de ladite couche de matériau(x) transparent(s) afin d'obtenir ledit ensemble de cellules juxtaposées parallèlement à ladite surface;
- réaliser une attaque chimique, ou physico-chimique du revêtement absorbant au sein de chaque cellule.

13. Procédé selon l'une quelconque des revendications précédentes, comprenant les étapes suivantes:
- déposer un revêtement absorbant à travers un masque, ledit masque présentant le profil de la distribution des cellules au sein du réseau que l'on souhaite obtenir;
- déposer une couche de matériaux transparents constitutifs des parois par procédé de photolithographie positive en alignant ladite couche de matériaux transparents au motif du revêtement absorbant.

14. Procédé selon l'une quelconque des revendications précédentes, comprenant les étapes suivantes:
- déposer une couche uniforme de matériau(x) transparent(s) constitutif(s) des parois sur l'ensemble de la surface d'un support transparent rigide ou d'un film transparent souple;
- déposer une couche métallique sur ladite couche uniforme de matériau(x) constitutif(s);
- réaliser les cellules par un procédé de gravure au travers d'un masque de ladite couche métallique, puis de ladite couche de matériau(x) transparent(s) afin d'obtenir ledit ensemble de cellules juxtaposées parallèlement à ladite surface.

15. Procédé selon l'une quelconque des revendications précédentes, dans lequel le réseau de cellules est obtenu par un procédé choisi parmi l'impression à chaud, l'embossage à chaud, le micromoulage, la photolithographie, la microdéposition, la sérigraphie, et l'impression par jet de matière.

16. Procédé selon l'une quelconque des revendications 12 à 13, dans lequel l'attaque de la couche métallique est réalisée par un procédé RIE (Reactive Ion Etching).

17. Procédé selon l'une des revendications 12 à 15, dans lequel le matériau constitutif des parois présente une absorption sur tout ou partie du spectre visible.

18. Procédé selon l'une quelconque des revendications précédentes, qui comprend la formation sur un substrat d'un réseau de parois pour délimiter les cellules parallèlement à ladite surface du composant, la formation d'au moins un revêtement absorbant parallèlement à la surface desdites parois cette étape intervenant antérieurement et/ou postérieurement à la formation dudit réseau de parois, un remplissage collectif ou individuel des cellules avec la substance à propriété optique sous forme de liquide ou de gel, et la fermeture des cellules sur leur côté opposé au substrat.

19. Procédé selon l'une des revendications précédentes, dans lequel le revêtement absorbant comprend un métal choisi parmi l'aluminium, l'argent, le chrome, le titane, le platine, le nickel, le cuivre, le fer, le zinc, l'étain, le palladium et l'or.

20. Procédé selon la revendication 19, dans lequel le revêtement absorbant comprend un métal choisi parmi l'argent, l'aluminium, le titane, le chrome et l'or.

21. Procédé selon l'une des revendications précédentes dans lequel le revêtement absorbant comprend un matériau absorbant choisi parmi les matériaux hybrides tels que les résines sol-gel, les matériaux composites tels que les mélanges de céramiques/métaux ou silice/métaux, et le carbone.

22. Procédé selon l'une des revendications précédentes dans lequel le revêtement absorbant comprend un matériau absorbant choisi parmi les polymères intrinsèquement absorbants ou rendus absorbant par dopage, par diffusion ou par absorption de particules absorbantes.

23. Procédé selon la revendication 22 dans lequel les particules absorbantes sont choisies parmi les colorants, les encres, les pigments, les colloïdes, les particules métalliques, les alliages, le noir de carbone, et les nanotubes de carbones.

24. Composant optique adapté pour la fabrication d'un élément optique transparent choisi parmi des lentilles ophtalmiques, des lentilles de contact, des implants oculaires, des lentilles pour instruments d'optiques, des lentilles de visée optique et des visières oculaires, le composant optique comprenant au moins un ensemble transparent de cellules juxtaposées parallèlement à une surface du composant, chaque cellule étant séparée par des parois, et au moins un revêtement absorbant placé sur les parois sur un côté s'étendant parallèlement à ladite surface du composant, chaque cellule étant hermétiquement fermée et contenant au moins une substance à propriété optique.

25. Composant optique selon la revendication 24, dans lequel le revêtement absorbant est déposé parallèlement à la base de la surface des parois.

26. Composant optique selon la revendication 25, dans lequel le revêtement absorbant présente une épaisseur identique à l'épaisseur des parois ou une épaisseur supérieure à l'épaisseur des parois.

27. Composant optique selon la revendication 24, dans lequel le revêtement absorbant est déposé parallèlement au sommet de la surface des parois.

28. Composant optique selon la revendication 24, dans lequel le revêtement absorbant est déposé parallèlement à la base et au sommet de la surface des parois.

29. Composant optique selon l'une des revendications 24 à 28, dans lequel le revêtement absorbant comprend un matériau choisi parmi l'aluminium, l'argent, le chrome, le titane, le platine, le nickel, le cuivre, le fer, le zinc, l'étain, le palladium et l'or.

30. Composant optique selon la revendication 29, dans lequel le matériau est choisi parmi l'argent, l'aluminium, le titane, le chrome et l'or.

31. Composant optique selon l'une des revendications 24 à 28, dans lequel le revêtement absorbant comprend un matériau choisi parmi les matériaux hybrides tels que les résines sol-gel, les matériaux composites tels que les mélanges de céramiques/métaux ou silice/métaux, et le carbone.

32. Composant optique selon l'une des revendications 24 à 28, dans lequel le revêtement absorbant comprend un matériau choisi parmi les polymères intrinsèquement absorbants ou rendus absorbants par dopage, par diffusion ou par absorption de particules absorbantes.

33. Composant optique selon la revendication 32, dans lequel les particules absorbantes sont choisies parmi les colorants, les encres, les pigments, les colloïdes, les particules métalliques, les alliages, le noir de carbone, et les nanotubes de carbone.

34. Composant optique selon l'une des revendications 24 à 33, dans lequel le revêtement absorbant présente une hauteur comprise entre quelques nanomètres et 5 µm, préférentiellement entre 2 nm et 2 µm.

35. Composant optique selon l'une des revendications 24 à 34, dans lequel les cellules sont séparées par des parois d'épaisseur (e) comprise entre 0,10 µm et 5 µm, et de hauteur (h) comprise 1 µm et 50 µm inclus.

36. Composant optique selon l'une des revendications 24 à 35, dans lequel le facteur de remplissage est compris entre 90 % et 99,5 % inclus.

37. Verre de lunettes réalisé en découpant un composant optique selon l'une quelconque des revendications 24 à 36.

38. Verre de lunettes selon la revendication 37, dans lequel au moins un perçage est réalisé à travers le composant (10) pour la fixation du verre (11) sur une monture.

## Patentansprüche

1. Verfahren zur Herstellung eines transparenten optischen Elements, das unter ophtalmischen Linsen, Kontaktlinsen, Augenimplantaten, Linsen für optische Geräte, optischen Ziellinsen, Okularvisieren ausgewählt ist, wobei das Verfahren die Erzeugung einer transparenten optischen Komponente umfasst, die mindestens aufweist:
- eine Gesamtheit von parallel zu einer Oberfläche der Komponente nebeneinander liegenden Zellen, wobei jede Zelle hermetisch dicht verschlossen ist und eine Substanz mit optischer Eigenschaft enthält, wobei die Zellen durch Wände getrennt sind;
- und mindestens einen absorbierenden Überzug, der an den Wänden auf einer Seite, die sich parallel zur Oberfläche der Komponente erstreckt, angeordnet ist.

2. Verfahren zur Herstellung eines transparenten optischen Elements nach Anspruch 1, ferner umfassend einen Schritt des Ausschneidens der optischen Komponente entlang einer definierten Kontur auf der Oberfläche entsprechend einer bestimmten Form für das optische Element.

3. Verfahren nach einem der vorhergehenden Ansprüche, bei dem die optische Eigenschaft unter einer Eigenschaft der Färbung, der Photochromie, der Polarisation und des Brechungsindex ausgewählt ist.

4. Verfahren nach Anspruch 3, bei dem die Substanz mit optischer Eigenschaft, die in mindestens gewissen der Zellen enthalten ist, in Form einer Flüssigkeit oder eines Gels vorhanden ist.

5. Verfahren nach einem der vorhergehenden Ansprühe, bei dem die Gesamtheit der Zellen der optischen Komponente direkt auf einem starren transparenten Träger oder innerhalb einer weichen transparenten Folie, die dann auf einen starren transparenten Träger aufgebracht wird, ausgebildet ist.

6. Verfahren nach Anspruch 5, bei dem der starre transparente Träger konvex, konkav oder flach auf der Seite sein kann, die die Gesamtheit der Zellen aufnimmt.

7. Verfahren nach einem der vorhergehenden Ansprüche, bei dem der absorbierende Überzug mindestens ein Absorptionsband mit einer Wellenlänge zwischen 400 nm und 700 nm aufweist.

8. Verfahren nach Anspruch 7, bei dem der absorbierende Überzug ein Absorptionsband auf der Gesamtheit des sichtbaren Spektrums aufweist.

9. Verfahren nach Anspruch 8, bei dem der absorbierende Überzug ferner ein Spektralabsorptionsband im nahen Infrarotbereich, d.h. über 700 nm, und/oder im nahen UV-Bereich, d.h. unter 400 nm, aufweist.

10. Verfahren nach einem der vorhergehenden Ansprüche, bei dem der absorbierende Überzug durch ein Metallisierungsverfahren hergestellt wird.

11. Verfahren nach einem der vorhergehenden Ansprüche, bei dem der absorbierende Überzug vor der Bildung der Wände oder nach der Bildung der Wände aufgebracht wird.

12. Verfahren nach einem der vorhergehenden Ansprüche, umfassend die folgenden Schritte:
- Aufbringen eines einheitlichen absorbierenden Überzugs auf die Gesamtheit der Oberfläche eines starren transparenten Trägers oder einer weichen transparenten Folie;
- Aufbringen einer Schicht von transparentem(n) Material(ein), die die Wände bilden, und Herstellen des Netzes von Zellen innerhalb der Schicht von transparentem(n) Material(ein), um die Gesamtheit von parallel zur Oberfläche nebeneinander liegenden Zellen zu erhalten;
- Durchführen eines chemischen oder physikalischchemischen Angriffs des absorbierenden Überzugs innerhalb jeder Zelle.

13. Verfahren nach einem der vorhergehenden Ansprüche, umfassend die folgenden Schritte:
- Aufbringen eines absorbierenden Überzugs durch eine Maske, wobei die Maske das Profil der Verteilung der Zellen innerhalb des Netzes, das erzielt werden soll, aufweist;
- Aufbringen einer Schicht von transparenten Materialien, die die Wände bilden, durch positive Photolithographie, wobei die Schicht von transparenten Materialien mit dem Motiv des absorbierenden Überzugs ausgerichtet wird.

14. Verfahren nach einem der vorhergehenden Ansprüche, umfassend die folgenden Schritte:
- Aufbringen einer einheitlichen Schicht von transparentem(n) Material(ein), die die Wände bilden, auf die Gesamtheit der Oberfläche eines starren transparenten Trägers oder einer weichen transparenten Folie;
- Aufbringen einer metallischen Schicht auf die einheitliche Schicht von bildendem(n) Material(ein);
- Herstellen der Zellen durch ein Gravurverfahren durch eine Maske der metallischen Schicht, dann der Schicht von transparentem(n) Material (ein), um die Gesamtheit von parallel zur Oberfläche nebeneinander liegenden Zellen zu erhalten.

15. Verfahren nach einem der vorhergehenden Ansprüche, bei dem das Netz von Zellen durch ein Verfahren erhalten wird, das ausgewählt ist unter dem Thermodruck, dem Heißprägen, dem Mikroformen, der Photolithographie, der Mikroabscheidung, dem Siebdruck und dem Materialstrahldruck.

16. Verfahren nach einem der Ansprüche 12 bis 13, bei dem der Angriff der metallischen Schicht durch ein RIE-Verfahren (Reactive Ion Etching) durchgeführt wird.

17. Verfahren nach einem der Ansprüche 12 bis 15, bei dem das die Wände bildende Material eine Absorption auf der Gesamtheit oder einem Teil des sichtbaren Spektrums aufweist.

18. Verfahren nach einem der vorhergehenden Ansprüche, das auf einem Substrat die Bildung eines Netzes von Wänden, um die Zellen parallel zur Oberfläche der Komponente zu begrenzen, die Bildung mindestens eines absorbierenden Überzugs parallel zur Oberfläche der Wände, wobei dieser Schritt vor und/oder nach der Bildung des Netzes von Wänden durchgeführt wird, ein kollektives oder individuelles Füllen der Zellen mit der Substanz mit optischer Eigenschaft in Form einer Flüssigkeit oder eines Gels und das Schließen der Zellen auf ihrer dem Substrat gegenüberliegenden Seite umfasst.

19. Verfahren nach einem der vorhergehenden Ansprüche, bei dem der absorbierende Überzug ein Metall umfasst, das unter Aluminium, Silber, Chrom, Titan, Platin, Nickel, Kupfer, Eisen, Zink, Zinn, Palladium und Gold ausgewählt ist.

20. Verfahren nach Anspruch 19, bei dem der absorbierende Überzug ein Metall umfasst, das unter Silber, Aluminium, Titan, Chrom und Gold ausgewählt ist.

21. Verfahren nach einem der vorhergehenden Ansprüche, bei dem der absorbierende Überzug ein absorbierendes Material umfasst, das unter den Hybridmaterialien, wie den Sol-Gel-Harzen, den Verbundstoffen, wie den Gemischen von Keramiken/Metallen oder Siliziumoxide/Metallen, und Kohlenstoff ausgewählt ist.

22. Verfahren nach einem der vorhergehenden Ansprüche, bei dem der absorbierende Überzug ein absorbierendes Material umfasst, das unter den intrinsisch absorbierenden oder durch Dopen, Diffusion oder Absorption von absorbierenden Partikeln absorbierend gemachten Polymeren ausgewählt ist.

23. Verfahren nach Anspruch 22, bei dem die absorbierenden Partikel unter den Farbstoffen, den Tinten, den Pigmenten, die Kolloiden, den Metallpartikeln, den Legierungen, dem Carbon Black und den Kohlenstoff-Nanoröhrchen ausgewählt sind.

24. Optische Komponente, geeignet für die Herstellung eines transparenten optischen Elements, das unter ophtalmischen Linsen, Kontaktlinsen, Augenimplantaten, Linsen für optische Geräte, optischen Ziellinsen und Okularvisieren ausgewählt ist, wobei die optische Komponente mindestens eine transparente Gesamtheit von parallel zu einer Oberfläche der Komponente nebeneinander liegenden Zellen, wobei jede Zelle durch Wände getrennt ist, und mindestens einen absorbierenden Überzug umfasst, der an den Wänden auf einer Seite, die sich parallel zur Oberfläche der Komponente erstreckt, angeordnet ist, wobei jede Zelle hermetisch dicht verschlossen ist und mindestens eine Substanz mit optischer Eigenschaft enthält.

25. Optische Komponente nach Anspruch 24, bei der der absorbierende Überzug parallel zur Basis der Oberfläche der Wände aufgebracht ist.

26. Optische Komponente nach Anspruch 25, bei der der absorbierende Überzug eine identische Dicke wie die Dicke der Wände oder eine größere Dicke als die Dicke der Wände aufweist.

27. Optische Komponente nach Anspruch 24, bei der der absorbierende Überzug parallel zum Scheitel der Oberfläche der Wände aufgebracht ist.

28. Optische Komponente nach Anspruch 24, bei der der absorbierende Überzug parallel zur Basis und zum Scheitel der Oberfläche der Wände aufgebracht ist.

29. Optische Komponente nach einem der Ansprüche 24 bis 28, bei der der absorbierende Überzug ein Material umfasst, das unter Aluminium, Silber, Chrom, Titan, Platin, Nickel, Kupfer, Eisen, Zink, Zinn, Palladium und Gold ausgewählt ist.

30. Optische Komponente nach Anspruch 29, bei der das Material unter Silber, Aluminium, Titan, Chrom und Gold ausgewählt ist.

31. Optische Komponente nach einem der Ansprüche 24 bis 28, bei der der absorbierende Überzug ein Material umfasst, das unter den Hybridmaterialien, wie den Sol-Gel-Harzen, den Verbundstoffen, wie den Gemischen von Keramiken/Metallen oder Siliziumoxid/Metallen, und Kohlenstoff ausgewählt ist.

32. Optische Komponente nach einem der Ansprüche 24 bis 28, bei der der absorbierende Überzug ein Material umfasst, das unter den intrinsisch absorbierenden oder durch Dopen, Diffusion oder Absorption von absorbierenden Partikeln absorbierend gemachten Polymeren ausgewählt ist.

33. Optische Komponente nach Anspruch 32, bei der die absorbierenden Partikel unter den Farbstoffen, den Tinten, den Pigmenten, den Kolloiden, den metallischen Partikeln, den Legierungen, dem Carbon Black und den Kohlenstoff-Nanoröhrchen ausgewählt ist.

34. Optische Komponente nach einem der Ansprüche 24 bis 33, bei der der absorbierende Überzug eine Höhe zwischen einigen Nanometern und 5 µm, vorzugsweise zwischen 2 nm und 2 µm aufweist.

35. Optische Komponente nach einem der Ansprüche 24 bis 34, bei der die Zellen durch Wände mit einer Stärke (e) zwischen 0,10 µm und 5 µm und einer Höhe (h) zwischen 1 µm und 50 µm inklusive getrennt sind.

36. Optische Komponente nach einem der Ansprüche 24 bis 35, bei der der Füllfaktor zwischen 90 % und 99,5 % inklusive beträgt.

37. Brillenglas, das durch Ausschneiden einer optischen Komponente nach einem der Ansprüche 24 bis 36 hergestellt wird.

38. Brillenglas nach Anspruch 37, bei dem mindestens eine Bohrung durch die Komponente (10) zur Befestigung des Glases (11) auf einer Fassung vorgesehen ist.

## Claims

1. Method for producing a transparent optical element selected from ophthalmic lenses, contact lenses, eye implants, lenses for optical instruments, optical viewing lenses and eyeshades, the method comprising the production of a transparent optical component having at least:
- one set of cells juxtaposed parallel to a surface of the component, each cell being hermetically sealed and containing a substance having an optical property, the cells being separated by walls;
- and at least one absorbent coating, placed on the walls on one side extending parallel to the said component surface.

2. Method for producing a transparent optical element according to Claim 1, further comprising a step of cutting out the optical component along a contour defined on the said surface, corresponding to a predefined shape for the optical element.

3. Method according to either of the preceding claims, in which the optical property is selected from colouration, photochromism, polarization and refractive index.

4. Method according to Claim 3, in which the substance having an optical property contained in at least some of the cells is in liquid or gel form.

5. Method according to any one of the preceding claims, in which the set of cells of the optical component is formed directly on a rigid transparent support, or in a flexible transparent film, then transferred to a rigid transparent support.

6. Method according to Claim 5, in which the rigid transparent support may be convex, concave, or plane on the side receiving the set of cells.

7. Method according to any one of the preceding claims, in which the absorbent coating has at least one absorption band with a wavelength of between 400 nm and 700 nm.

8. Method according to Claim 7, in which the absorbent coating has an absorption band over the whole visible spectrum.

9. Method according to Claim 8, in which the absorbent coating also has a spectral absorption band in the near infrared, that is higher than 700 nm and/or in the near ultraviolet, that is lower than 400 nm.

10. Method according to any one of the preceding claims, in which the absorbent coating is produced by a metallization process.

11. Method according to any one of the preceding claims, in which the absorbent coating is deposited prior to the formation of the said walls, or subsequent to the formation of the said walls.

12. Method according to any one of the preceding claims, comprising the following steps:
- depositing a uniform absorbent coating on the whole of the surface of a rigid transparent support or of a flexible transparent film;
- depositing a layer of component transparent material(s) of the walls and producing a cell network in the said layer of transparent material(s) in order to obtain the said set of cells juxtaposed in parallel to the said surface;
- carrying out a chemical or physicochemical attack of the absorbent coating in each cell.

13. Method according to any one of the preceding claims, comprising the following steps:
- depositing an absorbent coating through a mask, the said mask having the profile of the cell distribution in the network to be obtained;
- depositing a layer of component transparent materials of the walls by a positive photolithographic process while aligning the said layer of transparent materials with the motif of the absorbent coating.

14. Method according to any one of the preceding claims, comprising the following steps:
- depositing a uniform layer of component transparent material(s) of the walls on the whole of the surface of a rigid transparent support or of a flexible transparent film;
- depositing a metal layer on the said uniform layer of component material(s);
- producing the cells by an etching process through the mask of the said metal layer, and then the said layer of transparent material(s) in order to obtain the said set of cells juxtaposed parallel to the said surface.

15. Method according to any one of the preceding claims, in which the cell network is obtained by a method selected from hot printing, hot embossing, micromoulding, photolithography, microdeposition, screen printing, and inkjet printing.

16. Method according to either of Claims 12 and 13, in which the metal layer is attacked by a RIE (Reactive Ion Etching) process.

17. Method according to one of Claims 12 to 15, in which the component material of the walls has an absorption over all or part of the visible spectrum.

18. Method according to any one of the preceding claims, which comprises the formation of a wall network on a substrate to bound the cells parallel to the said component surface, the formation of at least one absorbent coating parallel to the surface of the said walls, this step taking place prior to and/or subsequent to the formation of the said wall network, a collective or individual filling of the cells with the substance having an optical property in liquid or gel form, and the closure of the cells on their side opposite the substrate.

19. Method according to one of the preceding claims, in which the absorbent coating comprises a metal selected from aluminium, silver, chromium, titanium, platinum, nickel, copper, iron, zinc, tin, palladium and gold.

20. Method according to Claim 19, in which the absorbent coating comprises a metal selected from silver, aluminium, titanium, chromium and gold.

21. Method according to one of the preceding claims, in which the absorbent coating comprises an absorbent material selected from hybrid materials such as sol-gel resins, composites such as ceramic/metal or silica/metal mixtures, and carbon.

22. Method according to one of the preceding claims, in which the absorbent coating comprises an absorbent material selected from polymers intrinsically absorbent or made absorbent by doping, diffusion or absorption of absorbent particles.

23. Method according to Claim 22, in which the absorbent particles are selected from dyes, inks, pigments, colloids, metal particles, alloys, carbon black, and carbon nanotubes.

24. Optical component suitable for the production of a transparent optical element selected from ophthalmic lenses, contact lenses, eye implants, lenses for optical instruments, optical viewing lenses and eyeshades, the optical component comprising at least one set of transparent cells juxtaposed parallel to a surface of the component and at least one absorbent coating, placed on the walls on one side extending parallel to the said component surface, each cell being hermetically sealed and containing a substance having an optical property, all the cells being separated by walls.

25. Optical component according to Claim 24, in which the absorbent coating is deposited parallel to the base of the wall surface.

26. Optical component according to Claim 25, in which the absorbent coating has a thickness identical to the wall thickness or a thickness higher than the wall thickness.

27. Optical component according to Claim 24, in which the absorbent coating is deposited parallel to the top of the wall surface.

28. Optical component according to Claim 24, in which the absorbent coating is deposited parallel to the base and to the top of the wall surface.

29. Optical component according to one of Claims 24 to 28, in which the absorbent coating comprises a material selected from aluminium, silver, chromium, titanium, platinum, nickel, copper, iron, zinc, tin, palladium and gold.

30. Optical component according to Claim 29, in which the material is selected from silver, aluminium, titanium, chromium and gold.

31. Optical component according to one of Claims 24 to 28, in which the absorbent coating comprises a material selected from hybrid materials such as sol-gel resins, composites such as ceramic/metal or silica/metal mixtures, and carbon.

32. Optical component according to one of Claims 24 to 28, in which the absorbent coating comprises a material selected from polymers intrinsically absorbent or made absorbent by doping, diffusion or absorption of absorbent particles.

33. Optical component according to Claim 32, in which the absorbent particles are selected from dyes, inks, pigments, colloids, metal particles, alloys, carbon black, and carbon nanotubes.

34. Optical component according to one of Claims 24 to 33, in which the absorbent coating has a height of between a few nanometres and 5 µm, preferably between 2 nm and 2 µm.

35. Optical component according to one of Claims 24 to 34, in which the cells are separated by walls having a thickness (e) of between 0.10 µm and 5 µm, and a height (h) of between 1 µm and 50 µm inclusive.

36. Optical component according to one of Claims 24 to 35, in which the filling ratio is between 90% and 99.5% inclusive.

37. Spectacle lens produced by cutting out an optical component according to any one of Claims 24 to 36.

38. Spectacle lens according to Claim 37, in which at least one hole is drilled through the component (10) to fasten the lens (11) to a frame.
